# EUROPÄISCHE PATENTANMELDUNG

(11) **EP 2 575 373 A1**
(43) Veröffentlichungstag der Anmeldung: **03.04.2013**
(21) Anmeldenummer: 12186601.6
(22) Anmeldetag: 28.09.2012
(51) Int. Cl.: H04N 21/475, H04N 21/482, H04N 21/84, H04N 21/45

(54) **Digitaler Fernsehempfänger mit Mitteln zur effizienten Verwaltung von Programmdiensten**

(30) Priorität: 30.09.2011 DE 102011083922
(71) Anmelder: Technisat Digital Gmbh, 54550 Daun (DE)
(72) Erfinder: Burmeister, Dipl.-Ing. Jens, 01159 Dresden (DE); Rother, Dipl.-Ing. Norman, 01187 Dresden (DE)

(57) **Zusammenfassung**

Die Aufgabe der vorliegenden Erfindung besteht darin, einem Nutzer ein Verfahren und eine Vorrichtung bereitzustellen, mit dem eine zeitsparende und komfortable Verwaltung, insbesondere ein komfortables Filtern von Programmdiensten, die mit einem digitalen Fernsehempfänger empfangbar sind, möglich ist, wobei die durch Dienstattribute gekennzeichneten Programmdienste verschiedenen Programmdienstlisten zugeordnet sind. Die Aufgabe wird mit dem erfindungsgemäßen Verfahren und einer Vorrichtung zum Filtern von Programmdiensten gelöst, welche im Fernseh-Betrieb, im Radio-Betrieb oder im Internet-Betrieb empfangbar sind und wiedergegeben werden können. Bei der vorliegenden Erfindung ist es möglich, eine Programmdienstliste aus einer Mehrzahl von Programmdienstlisten auszuwählen und diese anhand mehrerer Filterattribute von einem internen Prozessor filtern zu lassen. Bei der vorliegenden Erfindung ist es unerheblich, ob die Filterattribute einer Filterart oder verschiedenen Filterarten zugeordnet sind.

## Beschreibung

Die vorliegende Erfindung betrifft die Verwaltung von Programmdiensten, insbesondere ein effizientes und komfortables Filtern eines oder mehrerer Programmdienste aus einer Vielzahl von verfügbaren Programmdiensten, die mit einer Fernsehempfangseinrichtung empfangen und wiedergegeben werden können.

Die Fernsehempfangseinrichtung kann ein digitaler Fernsehempfänger sein, welcher einen Empfang von digitalen Programminhalten des Hörrundfunks, Fernsehrundfunks, einen Zugriff auf interaktive Dienste, wie beispielsweise eine elektronische Programmzeitschrift, auf Teletext und einen Zugriff auf Inhalte aus dem Internet über eine entsprechende Schnittstelle ermöglicht. Digitale Fernsehempfänger gewährleisten den Empfang und die Wiedergabe von einer steigenden Anzahl verschiedenster Programmdienste und Programmbeiträge, die von einer wachsenden Anzahl von Programmdienstanbietern bereitgestellt werden. Es wird unterschieden zwischen frei empfangbaren Programmdiensten und solchen Programmdiensten, die zwar empfangbar sind, aber deren Programminhalte verschlüsselt sind, wie die von "Pay-TV" oder "Pay-Radio", und für deren Entschlüsselung und Wiedergabe der Fernsehempfänger ein Entschlüsselungsmodul aufweisen muss.

Die Fernsehempfänger empfangen die digitalen Audio- und Videoinhalte und die entsprechende Service Information, kurz als "SI-Daten" bezeichnet, über verschiedene Übertragungswege. Zu diesen Übertragungswegen zählen die Übertragungen über geostationäre Satelliten, wie ASTRA oder Eutelsat, die Verbreitung über Kabelnetze mittels Breitbandkabel, die terrestrische Übertragung sowie Verbindungen zu externen Quellen, wie dem Internet oder auch Digital Radio.

Die Programmdienste und Programmbeiträge vom Hörrundfunk und Fernsehrundfunk sowie die über das Internet zugänglichen Dienste, wie Mediatheken, sind durch mehrere verschiedene Dienstattribute gekennzeichnet. Diese Dienstattribute werden beispielsweise von den Programmdienstanbietern für die Programmdienste vergeben und über den Transportstrom beispielsweise mit den SI-Daten zum Empfang über die verschiedenen Übertragungswege bereitgestellt. Eine andere Möglichkeit ist, dass die Dienstattribute für die Programmdienste durch einen elektronischen Aktualisierungsdienst als proprietäre Daten von einem Anbieter, beispielsweise über Satellit, zu den entsprechenden Fernsehempfängern übertragen werden. Zu diesen Anbietern können auch Gerätehersteller von Fernsehempfängern zählen.

Die Dienstattribute sind Daten, die den Dienstnamen des Programmdienstes, eines Programmbeitrages oder den Dienstnamen des Programmdienstanbieters definieren, durch den die Programmdienste und Programmbeiträge bereitgestellt werden.

Weitere Dienstattribute charakterisieren die Kennzeichnung des Übertragungsweges, über den beispielsweise ein Programmdienst übertragen und empfangen wird. Andere Dienstattribute charakterisieren die Zuordnung des Programmdienstes, des Programmdienstanbieters oder des Programmbeitrages entsprechend ihres übertragenen und empfangbaren Inhalts zu einem Genre, wie Spielfilm, Nachrichten oder Kultur/Bildung. Die Programmdienste werden durch die Dienstattribute, welche die Bildauflösung betreffen, definiert und die Dienstattribute werden mit den Videodaten von den Programmdienstanbietern übertragen.

Zu den Programmdienstanbietern zählen beispielsweise die öffentlich-rechtlichen Sendeanstalten von "ARD" und "ZDFvision" sowie "RTL" und "ProSiebenSat.1" als Vertreter der privatrechtlichen Sendeanstalten. Diese verschiedenen Programmdienstanbieter stellen zum Beispiel die Programmdienste "Das Erste", "Das Erste HD", "ZDF", "ZDF HD" oder "ProSieben", die auch als Fernsehkanal bekannt sind, beispielsweise bei der Satellitenübertragung über verschiedene Transponderfrequenzen zum Empfang bereit.

Für die vorliegende Erfindung ist es unerheblich, ob es sich bei der Fernsehempfangseinrichtung um einen Hörrundfunkempfänger oder einen Fernsehempfänger handelt. Zu den digitalen Fernsehempfängern zählen nicht nur Fernsehgeräte im herkömmlichen Sinn, sondern auch solche Geräte, die nicht über integrierte Audio- und Videowiedergabemittel verfügen, sondern mit diesen über Kabel oder kabellos verbunden sind, wie die sogenannten Vorschaltgeräte, welche auch unter dem Begriff "Set-Top-Boxen" bekannt sind.

Der Fernsehempfänger der vorliegenden Erfindung weist eine oder mehrere Empfangseinrichtungen, einen Decoder, einen geräteinternen Prozessor, Videowiedergabemittel und eine Speichereinheit auf. Zum einheitlichen Steuern und Verwalten der komplexen Funktionsstruktur eines digitalen Fernsehempfängers dient eine auf den Empfängertyp angepasste Empfänger-Firmware. Im Interesse einer nutzerfreundlichen Bedienbarkeit stellt die an den Empfänger angepasste Empfänger-Firmware dem Nutzer eine prozessorgestützte grafische Benutzerschnittstelle zur Verfügung, welche als wesentliche Komponente eine interaktive Programmführungseinrichtung enthält.

Die Empfangseinrichtungen des Fernsehempfängers, auch als Tuner bezeichnet, gewährleisten den Empfang von Audio- und Videodaten sowie der ergänzenden Daten, welche über die verschiedenen Übertragungswege empfangen werden.

Die Speichereinheit weist einen Bereich auf, in dem beispielsweise Datensätze zu den Programmdiensten und deren Dienstattribute in einer Programmführungsdatenbank, die als relationale Datenbank ausgebildet ist, gespeichert werden. Die Programmführungsdatenbank umfasst mehrere Tabellen, die verschiedene Datensätze enthalten. Die einzelnen Tabellen und die darin gespeicherten Datensätze stehen durch Verknüpfungen in Beziehung zueinander. Eine der Tabellen beinhaltet beispielsweise Datensätze, die alle Programmdienste und die Programmdienste kennzeichnenden Dienstattribute aufweist, welche mit dem digitalen Fernsehempfänger in verschiedenen Betriebsarten empfangbar sind oder zum Empfang bereitgestellt werden. Eine weitere Tabelle beinhaltet Datensätze aller Programmdienstanbieter mit ihren entsprechenden Dienstattributen. Andere Tabellen der Programmführungsdatenbank beinhalten solche Datensätze, welche die Übertragungswege kennzeichnen, über welche die Programmdienste von den Programmdienstanbietern zum Empfang bereitgestellt werden oder beinhalten Datensätze, die verschiedene Genres kennzeichnen.

Die verschiedenen Datensätze zu den Dienstattributen werden in die Programmführungsdatenbank geladen, beispielsweise vom Hersteller des Fernsehempfängers als vorinstallierte Geräteparameter, vom geräteinternen Prozessor bei einer Erstinstallation oder im Laufe einer automatischen Aktualisierung der zum Empfang bereitstehenden Programmdienste.

Die interaktive Programmführungseinrichtung generiert im eingeschalteten Zustand des Fernsehempfängers nach einer Anforderung durch den Nutzer Menüseiten. Diese Menüseiten, auch kurz Menüs genannt, enthalten beispielsweise Übersichten mit einer elektronischen Programmzeitschrift, Übersichten mit Programmdienstlisten, Teletext oder ermöglichen ein Anpassen von Geräteeinstellungen. Über diese Menüseiten hat der Nutzer auch die Möglichkeit, einen Wechsel in eine andere als die gegenwärtig eingestellte Betriebsart des Fernsehempfängers anzusto βen.

Der erfindungsgemäße Fernsehempfänger, der beispielsweise über eine Verbindung zu einer Satellitenantenne verfügt, kann im Fernseh-Betrieb zur Wiedergabe von Audio- und Videoinhalten, im Radio-Betrieb für die Wiedergabe von Audioinhalten oder im Internet-Betrieb betrieben werden. Im Internet-Betrieb hat der Nutzer die Möglichkeit, über eine entsprechende Internet-Schnittstelle ergänzende Information zu Programmbeiträgen aufzurufen oder Programmbeiträge über die sogenannten Mediatheken der Programmdienstanbieter selbst aufzurufen.

Für jede der Betriebsarten des Fernsehempfängers wird eine Programmdienstliste von der Programmführungseinrichtung generiert, die an Videowiedergabemitteln oder an einer Bildwiedergabeeinheit, beispielsweise einem Bildschirm, ausgegeben werden kann.

Der digitale Fernsehempfänger wird durch Verwendung einer Fernbedieneinheit vom Nutzer bedient. Mit dieser Fernbedieneinheit ist es möglich, die verschiedenen Menüs aufzurufen. Zu den bekannten Fernbedieneinheiten zählen Fernbedienungen, Tastaturen, eine Computermaus oder berührungssensitive Bildschirme. Es ist auch möglich, dass der Fernsehempfänger mithilfe eines Sprachsteuerungssystems bedient wird.

Zur Steuerung des Fernsehempfängers wird bei der vorliegenden Erfindung eine Fernbedienung verwendet. Diese Fernbedienung weist mehrere Zifferntasten, Pfeiltasten, eine Bestätigungstaste, auch als OK-Taste bekannt, und weitere verschiedene Funktionstasten auf. Mit den Zifferntasten wird es dem Nutzer ermöglicht, von einem Programmdienst auf einen anderen Programmdienst umzuschalten oder bei einer Programmierung von Aufnahmen Zeitangaben einzugeben. Es gibt auch die Möglichkeit, mit einer Programm-Umschalttaste von einem eingestellten auf einen anderen Programmdienst zu wechseln.

Zum Umschalten auf einen anderen Programmdienst als den gegenwärtig eingestellten, ist es sinnvoll, dass dem Nutzer bekannt ist, welcher Programmplatznummer der von ihm gewünschte Programmdienst innerhalb der Programmdienstliste zugeordnet ist. Das ist aber schwierig, da zum Beispiel mit einem modernen Fernsehempfänger circa 600 Programmdienste empfangen werden können. Durch Betätigen der Funktionstasten der Fernbedienung, wie einer Optionstaste, werden Menüseiten aufgerufen, die ein Aufnehmen von ausgewählten Programmbeiträgen, ein Verwalten von Programmdiensten, wie ein Generieren von Programmdienstlisten, ein Umsortieren von Programmdiensten innerhalb einer Programmdienstliste ermöglichen.

Ein Menü, welches dem Nutzer am Bildschirm ausgegeben wird, kann beispielsweise eine Programmdienstlistenübersicht mit einer Programmdienstliste aufweisen, die alle der eingestellten Betriebsart zugeordneten sowie empfangbaren Programmdienste beinhaltet. Diese Programmdienstliste, die auch als Gesamtliste bezeichnet wird, weist alle jemals mit einer Programm-Dienstsuche gefundenen Programmdienste auf. Die der Gesamtliste zugeordneten Programmdienste sind beispielsweise alphabetisch sortiert.

Zusätzlich zur Gesamtliste sind weitere Programmdienstlisten in der Speichereinheit speicherbar. Beispielsweise kann der Nutzer am Bildschirm eine weitere Programmdienstliste aufrufen und zum Filtern auswählen, diese kann beispielsweise aus der Gesamtliste ausgewählte Programmdienste aufweisen, die solche Programmbeiträge zum Empfang bereitstellen, die den Nutzer besonders interessieren.

Es können auch solche Programmdienstlisten über eine Menüseite ausgewählt und angezeigt werden, die der Gerätehersteller vorinstalliert hat und bei welchen den Programmdiensten Programmplatznummern zugeordnet sind, die der Nutzer nicht ändern kann. Die Programmdienstlisten können alphabetisch oder entsprechend nach aufsteigenden oder absteigenden Programmplatznummern sortiert sein. Eine Änderung der Sortierung ist in einem Menü möglich. Das Verwalten der Programmdienste im Sinne der vorliegenden Erfindung beinhaltet auch solche vom Nutzer ausgelöste Aktionen, bei denen der Prozessor aus einer Programmdienstliste Programmdienste löscht, einzelnen Programmdiensten in einer Programmdienstliste andere Programmplatznummern zuordnet oder eine Programmdienstliste durch Hinzufügen von Programmdiensten ergänzt.

Der Decoder bearbeitet Datensätze von Programmdiensten, welche jeweils mehrere Dienstattribute aufweisen und die über ein Empfangsteil empfangbar sind.

Es sind Menüs bekannt, die zur Filterung von Programmdiensten, die einer Programmdienstliste zugeordnet sind, anhand von Programmdienstanbietern oder von Genres dienen. Es ist jedoch nicht bekannt, Programmdienste von der geräteinternen Recheneinheit, dem Prozessor, filtern zu lassen, die einer anderen Liste als der Gesamtliste zugeordnet sind.

Weiterhin ist bei den bekannten Verfahren von Nachteil, dass die Programmdienste in den Programmdienstlisten unterschiedlichen Programmlistenplätzen zugeordnet sind oder dass sie nach der Filterung anderen Programmplatznummern zugeordnet werden. Somit muss der Nutzer wissen, wenn er mithilfe der Zifferntasten der Fernbedienung zu einem anderen Programmdienst als den gerade eingestellten Programmdienst umschalten möchte, welche Programmdienstliste er gerade ausgewählt hat und welchen Programmlistenplatz der andere Programmdienst innerhalb der ausgewählten Programmdienstliste zugeordnet ist.

Der Nachteil am Verwenden der Pfeiltasten zum Umschalten von einem eingestellten Programmdienst auf einen anderen Programmdienst besteht darin, dass ein Auswählen eines gewünschten Programmdienstes innerhalb der Programmdienstlisten zeitaufwendig und unkomfortabel ist, weil der Nutzer bei der hohen Anzahl von empfangbaren Programmdiensten unter Umständen die Pfeiltasten mehrfach betätigen muss, um zum gewünschten Programmdienst zu gelangen.

Somit besteht die Aufgabe der vorliegenden Erfindung darin, ein Verfahren bereitzustellen, mit dem eine zeitsparende und komfortable Verwaltung, insbesondere ein komfortables Filtern von Programmdiensten ermöglicht wird, denen verschiedene Programmdienstlisten zugeordnet sind, und ein schneller Zugriff auf einen ausgewählten Programmdienst oder mehrere ausgewählte Programmdienste der Programmdienstliste gewährleistet wird.

Die Aufgabe wird mit dem erfindungsgemäßen Verfahren zum Filtern von Programmdiensten gelöst, wobei die Programmdienste einer ausgewählten Programmdienstliste zugeordnet sind, welche mittels einer Fernsehempfangseinrichtung empfangbar sind, wobei die Programmdienste jeweils einen Dienstnamen und ein Dienstattribut aus einer Mehrzahl unterschiedlicher Dienstattribute aufweisen und jeweils einer Programmplatznummer der Programmdienstliste zugeordnet sind, mit folgenden Schritten:
o Auswählen eines ersten Filterattributs aus einer Mehrzahl von Filterattributen,
o Speichern des ersten Filterattributs, sodass das erste Filterattribut der Programmdienstliste zugeordnet wird,
o Auswählen eines zweiten Filterattributs aus der Mehrzahl von Filterattributen,
o Speichern des zweiten Filterattributs, sodass das zweite Filterattribut der Programmdienstliste zugeordnet wird,
o Identifizieren derjenigen Programmdienste, welche jeweils ein Dienstattribut aufweisen, das mit dem ersten Filterattribut übereinstimmt, oder ein Dienstattribut aufweisen, das mit dem zweiten Filterattribut übereinstimmt, und
o Ausgeben der Dienstnamen der identifizierten Programmdienste und zugeordneten Programmplatznummern, sodass jeder der ausgegebenen Dienstnamen derjenigen Programmplatznummer zugeordnet wird, welcher der jeweilige Programmdienst ursprünglich zugeordnet war.

Die vorliegende Erfindung gewährleistet das Filtern einer Programmdienstliste aus einer Mehrzahl von Programmdienstlisten, die in der Programmführungsdatenbank gespeichert sind, anhand von zwei oder mehreren Filterattributen. Dabei ist es unerheblich, ob die Filterattribute einer Filterart oder verschiedenen Filterarten zugeordnet sind.

Der ausgewählten Programmdienstliste können zugeordnet sein:
o Programmdienste einer Betriebsart des Fernsehempfängers,
o Programmdienste unterschiedlicher Betriebsarten des Fernsehempfängers,
o alle empfangbaren Programmdienste, welche in der Betriebsart empfangbar sind, in der die Fernsehempfangseinrichtung gerade betrieben wird, und
o Programmdienste aller Betriebsarten, die mit dem Fernsehempfänger empfangen werden.

Zum Filtern ruft der Nutzer mit der Fernbedienung ein Menü auf, das von der Programmführungseinrichtung generiert und vom Prozessor am Bildschirm des Fernsehempfängers ausgegeben wird. In dem Menü, einem sogenannten "Navigator", wählt der Nutzer eine der Programmdienstlisten sowie zwei oder mehrere Filterattribute aus einer Mehrzahl von Filterattributen aus. Das Menü kann über einen empfangenen und am Bildschirm wiedergegebenen Programmbeitrag eingeblendet werden.

Die Filterattribute entsprechen dabei Dienstattributen, welche die Programmdienste kennzeichnen, sie sind durch die Empfänger-Firmware festgelegt. Die Dienstattribute werden regelmäßig von unterschiedlichen Quellen über die verschiedenen Übertragungswege aktualisiert, wie über eine Suche nach neuen Programmdiensten, auch als Kanalsuche bekannt, oder über einen regelmäßigen, automatischen Aktualisierungsdienst. Die Filterattribute können über eine aktualisierte Empfänger-Firmware den Dienstattributen angepasst werden. Nicht zu jedem Dienstattribut existiert ein entsprechendes Filterattribut, aber jedes Filterattribut ist einer Filterart zugeordnet.

Zu den Filterarten zählen die Genre-Filter, die entsprechend des Inhalts, den die Programmdienste übertragen, oder dem Inhalt von Programmbeiträgen, welche die Programmdienstanbieter zum Empfang bereitstellen, einem Genre zuordenbar sind. Zu den Genres, die sowohl als Dienstattribut und als Filterattribut existieren können, zählen beispielsweise "Spielfilm", "Nachrichten", "Kultur/Bildung" oder "Dokumentation/Abenteuer".

Eine weitere Filterart ist der Anbieter-Filter. Bei dieser Filterart kann der Nutzer aus mehreren verschiedenen Filterattributen, welche den Dienstnamen der mit dem Fernsehempfänger empfangbaren Programmdienstanbieter entsprechen, auswählen.

Als eine weitere Filterart wird dem Nutzer der Sprachen-Filter angeboten. Zu den möglichen Filterattributen innerhalb der Sprachen-Filter zählen beispielsweise die Sprachen Deutsch, Englisch, Französisch, Spanisch oder Russisch.

Weitere mögliche Filterarten sind Satelliten-Filter und die Signalquellen-Filter, welche zwischen den bekannten Übertragungswegen unterscheiden. Die Programmdienste, die dem Signalquellen-Filter entsprechen, liest der geräteinterne Prozessor anhand der entsprechenden Dienstattribute der Programmdienste und der Geräteeinstellungen aus.

Bei der vorliegenden Erfindung liegt die Programmdienstliste nach dem Filtern noch unverändert in der Programmführungsdatenbank vor. Es werden beim Filtern keine Programmdienste, die der ausgewählten Programmdienstliste zugeordnet sind, aus der Programmdienstliste gelöscht. Somit ist es gewährleistet, dass nach einem ersten Filtern der Nutzer die Programmdienste anhand anderer oder weiterer Filterattribute erneut filtern lassen kann.

Die Filterattribute, die der Programmdienstliste beim Filtern zugeordnet werden, werden beim Ausschalten des Fernsehempfängers automatisch zurückgesetzt. Somit steht nach einem erneuten Einschalten des Fernsehempfängers die Programmdienstliste in der Programmführungsdatenbank unverändert zur Verfügung und das Filtern kann erneut auch anhand anderer Filterattribute wiederholt werden.

Beim Filtern anhand von Filterattributen, die unterschiedlichen Filterarten zugeordnet sind, identifiziert der Prozessor nur diejenigen der Programmdienste, welche jeweils ein Dienstattribut aufweisen, das mit dem ersten Filterattribut übereinstimmt, und jeweils ein Dienstattribut aufweisen, das mit dem zweiten Filterattribut übereinstimmt.

Beispielsweise kann der Nutzer aus den Filterarten einen Anbieter-Filter mit dem Filterattribut "ARD" setzen und zusätzlich den Genre-Filter mit den Filterattributen "Spielfilm" und "Nachrichten" auswählen. Das bedeutet, dass die Programmdienste der ausgewählten Programmdienstliste anhand von drei Filterattributen, die zwei verschiedenen Filterarten zugeordnet sind, gefiltert werden.

Nach dem Filtern bereitet der Prozessor die Programmdienstliste für eine Ausgabe am Bildschirm derart auf, dass sie nur die Dienstnamen der identifizierten Programmdienste aufweist, somit ist die gefilterte und aufbereitete Programmdienstliste lückenbehaftet. Beispielsweise kann eine Programmdienstliste, der zehn Programmdienste zugeordnet sind, nach dem Filtern an der Ausgabeeinheit, dem Bildschirm, derart ausgegeben werden, dass sie nur die identifizierten Programmdienste, die den Programmplatznummern 1, 2, 3, 6, 7 und 9 zugeordnet sind, aufweist.

Der Nutzer kann von einem identifizierten und wiedergegebenen Programmdienst, durch Betätigen der Pfeiltasten oder den Zifferntasten der Fernbedienung, schnell zu einem anderen identifizierten Programmdienst der Programmdienstliste umschalten. Dabei ist von Vorteil, dass die identifizierten Programmdienste noch der Programmplatznummer zugeordnet sind, der sie vor dem Filtern zugeordnet waren.

Die einer Programmdienstliste zugeordneten Programmdienste können nach aufsteigenden oder absteigenden Programmplatznummern sortiert sein.

Bei dem erfindungsgemäßen Verfahren wird es dem Nutzer des Fernsehempfängers ermöglicht, eine Programmdienstliste aus einer Mehrzahl von Programmdienstlisten zum Filtern auszuwählen. Die verschiedenen Programmdienstlisten sind in einer relationalen Datenbank in der Speichereinheit des Fernsehempfängers gespeichert. Jeder Programmdienst der Programmdienstlisten weist einen Dienstnamen und eine Programmplatznummer auf. Diese Programmplatznummern geben an, welchen Programmplatz jedem einzelnen Programmdienst innerhalb einer Programmdienstliste zugeordnet ist.

In einer Ausführungsform des erfindungsgemäßen Verfahrens identifiziert der Prozessor vor dem Auswählen des zweiten Filterattributs in der Programmführungsdatenbank diejenigen Programmdienste, die jeweils ein Dienstattribut ausweisen, das mit dem ersten Filterattribut übereinstimmt. Nur die Dienstnamen der identifizierten Programmdienste werden zusammen mit den Programmplatznummern, denen die identifizierten Programmdienste zugeordnet sind, sofort am Bildschirm ausgegeben. Somit wird dem Nutzer noch vor der Auswahl oder während der Auswahl eines weiteren Filterattributs die gefilterte Programmdienstliste vom Prozessor am Bildschirm bereitgestellt.

Ein Vorteil des erfindungsgemäßen Verfahrens besteht darin, dass das Filtern anhand mehrerer Filterattribute nicht nur für die Programmdienstlisten gewährleistet ist, welchen alle Programmdienste einer der Betriebsarten des Fernsehempfängers zugeordnet sind, sondern auch solche Programmdienstlisten, die beispielsweise ausgewählte Programmdienste aufweisen, wie die sogenannten "Favoritenlisten".

Zusätzlich kann das Filtern auf Programmdienstlisten angewendet werden, deren zugeordnete Programmdienste in einem besonderen Menü zur "Listen-Verwaltung" unter Zuhilfenahme der Fernbedienung frei sortierbar sind und auf solche Programmdienstlisten, deren Sortierung beispielsweise durch einen Anbieter festgelegt ist und die der Nutzer nicht ändern kann.

Durch das erfindungsgemäße Verfahren wird es ermöglicht, mehrere Filterattribute so auszuwählen, dass der Prozessor diejenigen Programmdienste der Programmdienstliste identifiziert, die der Nutzer aus der Programmdienstliste löschen oder in eine andere Programmdienstliste aufnehmen oder zum Generieren einer weiteren Programmdienstliste nutzen möchte. Durch das erfindungsgemäße Verfahren wird die Verwaltung der Programmdienste und das Bearbeiten von Programmdienstlisten für den Nutzer wesentlich einfacher und komfortabler gestaltet.

Neben dem erfindungsgemäßen Verfahren wird auch eine Vorrichtung zum Ausführen des Verfahrens zum Filtern von Programmdiensten einer ausgewählten Programmdienstliste bereitgestellt, welche mittels einer Fernsehempfangseinrichtung empfangbar sind, wobei die Programmdienste jeweils einen Dienstnamen und ein Dienstattribut aus einer Mehrzahl unterschiedlicher Dienstattribute aufweisen und jeweils einer Programmplatznummer der Programmdienstliste zugeordnet sind, wobei die Vorrichtung die folgende Bestandteile aufweist:
○ eine Auswahleinrichtung, welche zum Auswählen eines ersten Filterattributs und eines zweiten Filterattributs aus einer Mehrzahl von Dienstattributen eingerichtet ist,
○ eine Speichereinheit, welche zum Speichern des ersten Filterattributs und des zweiten Filterattributs eingerichtet ist, sodass das erste Filterattribut und das zweite Filterattribut der Programmdienstliste zugeordnet werden,
○ einen Prozessor, welcher zum Identifizieren derjenigen Programmdienste eingerichtet ist, welche jeweils ein Dienstattribut aufweisen, das mit dem ersten Filterattribut übereinstimmt, oder ein Dienstattribut aufweisen, das mit dem zweiten Filterattribut übereinstimmt, und
○ Videowiedergabemittel, die zum Ausgeben der Dienstnamen der identifizierten Programmdienste und zugeordneten Programmplatznummern eingerichtet ist, sodass jeder der ausgegebenen Dienstnamen derjenigen Programmplatznummer zugeordnet wird, welcher der jeweilige Programmdienst ursprünglich zugeordnet war.

Im Folgenden wird eine Ausführungsform der Erfindung anhand der Figuren 1 bis 5 näher erläutert, die Figuren zeigen:
- Figur 1:: einen schematischen Ablauf des erfindungsgemäßen Verfahrens,
- Figur 2:: eine beispielhafte Programmdienstliste,
- Figur 3:: Datensätze der Programmdienstliste,
- Figur 4:: eine schematische Darstellung eines Menüs mit Filterarten und Filterattributen sowie
- Figur 5:: eine Programmdienstliste nach dem Filtern.

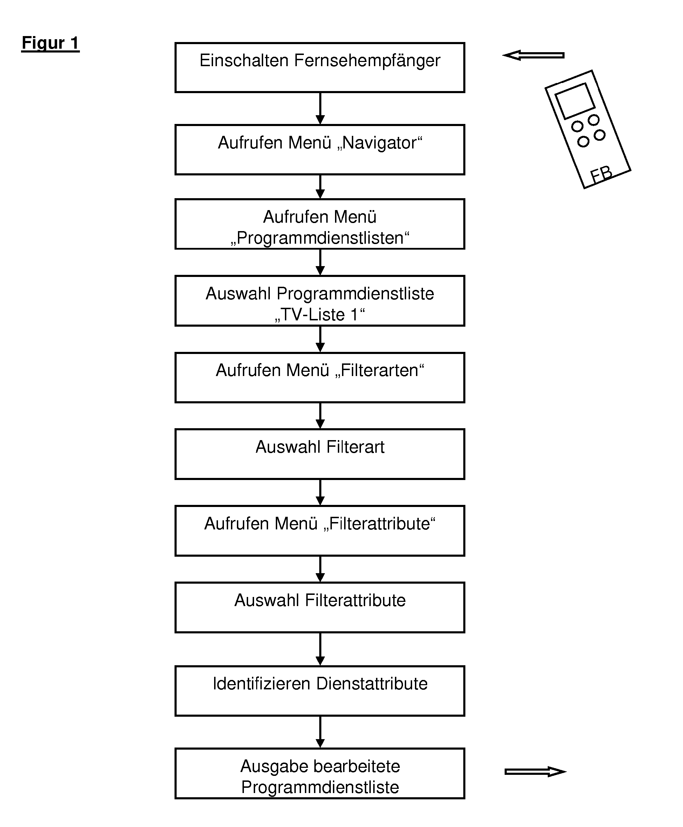

Die Figur 1 zeigt den schematischen Ablauf des erfindungsgemäßen Verfahrens. Nachdem der Nutzer in einem ersten Schritt den nicht dargestellten Fernsehempfänger mit der Fernbedienung FB eingeschaltet hat, gibt der Fernsehempfänger den Inhalt des zuletzt eingestellten Programmdienstes in der entsprechenden Betriebsart am Bildschirm wieder. Nach Betätigung einer Funktionstaste, wie der Bestätigungstaste der Fernbedienung FB, wird in einem nächsten Schritt das Menü "Navigator" aufgerufen. Im Fernseh-Betrieb wird eine Programmdienstliste über einen Programmbeitrag des vor dem Ausschalten des Fernsehempfängers eingestellten Programmdienstes am Bildschirm eingeblendet. Zum Generieren und zur Wiedergabe der Programmdienstliste ruft der Prozessor aus der Programmführungsdatenbank Datensätze ab, beispielsweise die Datensätze der Programmdienste, die in der eingestellten Betriebsart empfangbar sind.

In einem nachfolgenden Schritt, nachdem der Nutzer eine weitere Funktionstaste, zum Beispiel die Optionstaste der Fernbedienung FB, betätigt hat, wird das Menü zur Auswahl von "Programmdienstlisten" von der Programmführungseinrichtung generiert und am Bildschirm ausgegeben. In diesem Schritt werden alle Programmdienstlisten der eingestellten Betriebsart am Bildschirm ausgegeben, die in der relationalen Datenbank gespeichert sind, wie beispielsweise die "TV-Liste 1".

Es besteht auch die Möglichkeit über eine Funktionstaste zuerst ein Menü aufzurufen, in dem es möglich ist, in eine andere Betriebsart zu wechseln, um eine der entsprechenden Programmdienstlisten zum Filtern auszuwählen.

Der Nutzer wählt mit den Pfeiltasten der Fernbedienung FB den Namen der Programmdienstliste aus, wobei der Programmdienstliste ein oder mehrere Filterattribute zum Filtern zugeordnet werden sollen. Die Auswahl wird mit Betätigung der Bestätigungstaste abgeschlossen.

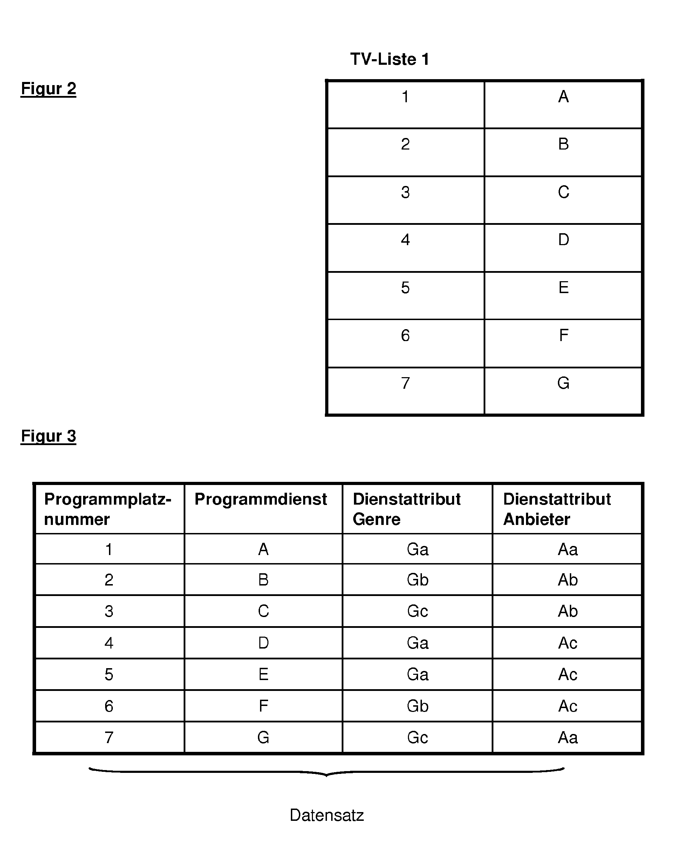

Die Figur 2 zeigt die zum Filtern ausgewählte Programmdienstliste "TV-Liste 1". Der beispielhaften Programmdienstliste sind sieben Programmdienste, die in der Fernseh-Betriebsart empfangbar sind, zugeordnet. Am Bildschirm werden die Dienstnamen der Programmdienste zusammen mit den Programmplatznummern angezeigt, welche die Programmdienste innerhalb der Programmdienstliste "TV-Liste 1" einnehmen. Es ist möglich, dass die am Bildschirm angezeigte Programmdienstliste zusätzliche Information zu den Programmdiensten enthält, wie beim Satellitenempfang die Angabe der Satellitenposition über den die einzelnen Programmdienste empfangbar sind oder Angaben darüber, ob ein Programmdienst verschlüsselt oder unverschlüsselt ist.

Die Figur 3 zeigt die Datensätze, die der Programmdienstliste "TV-Liste 1" zugrunde liegen, und die in der Programmführungsdatenbank, welche in der internen Speichereinheit des Fernsehempfängers gespeichert sind. Jeder der Programmdienste weist einen Dienstnamen sowie Dienstattribute, beispielsweise Genres und Anbieter betreffend, auf. In der Figur 2 und Figur 3 ist dem Programmdienst A die Programmplatznummer 1 zugeordnet und der Programmdienst A weist entsprechend seines übertragenen Inhalts das Dienstattribut Genre betreffend "Ga" auf. Der Programmdienst A weist entsprechend dem Programmdienstanbieter, der den Programmdienst A zum Empfang bereitstellt, das Dienstattribut Anbieter betreffend "Aa" auf.

Nach Auswahl der Programmdienstliste, der die Programmdienste zugeordnet sind, die gefiltert werden sollen, ruft der Nutzer in einem weiteren Schritt durch Betätigung einer Funktionstaste ein Menü zum Auswählen von "Filterarten" auf. In diesem Menü ist gewährleistet, dass aus den angebotenen Filterarten mithilfe der Pfeiltasten eine Filterart ausgewählt werden kann. Die Auswahl der Filterart wird durch Betätigen der Bestätigungstaste beendet. Zu möglichen Filterarten gehören Genrefilter, Anbieterfilter, Satellitenfilter, Sprachenfilter oder Signalquellenfilter. Nach Betätigen der Bestätigungstaste wird von der Programmführungseinrichtung das Menü zur Auswahl von "Filterattributen" generiert und am Bildschirm ausgegeben. Dem Nutzer werden mit dem Menü die Filterattribute zur Auswahl bereitgestellt, die der ausgewählten Filterart zugeordnet sind.

Filterarten und Filterattribute sind in der internen Speichereinheit des Fernsehempfängers gespeichert. Vom Nutzer ausgewählte Filterarten und Filterattribute werden von der Programmführungseinrichtung am Bildschirm in den Menüs besonders hervorgehoben, beispielsweise durch einen Haken.

Hat der Nutzer eine Filterart durch Betätigung der Bestätigungstaste ausgewählt, stellt die Programmführungseinrichtung am Bildschirm ein weiteres Menü bereit, das Filterattribute zur Anzeige bringt, die der vom Nutzer ausgewählten Filterart zugeordnet sind. Dazu ruft die Programmführungseinrichtung aus der Speichereinheit die entsprechenden Filterattribute ab und gibt sie am Bildschirm aus.

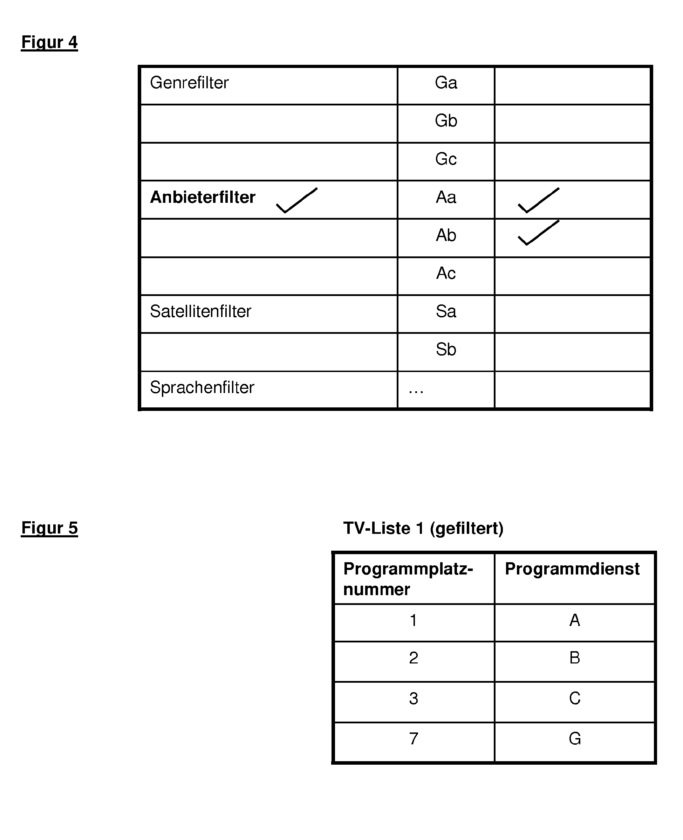

Im vorliegenden Beispiel hat der Nutzer die Filterattribute "Aa" und "Ab" ausgewählt, die dem Anbieterfilter zugeordnet sind. Wie in Figur 4 gezeigt, werden die vom Nutzer ausgewählten Filterarten sowie die ausgewählten Filterattribute hervorgehoben, beispielsweise durch einen Haken im Menü gekennzeichnet.

Nachdem der Nutzer ein Filterattribut aus einer Mehrzahl von Filterattributen ausgewählt und die Auswahl bestätigt hat, überprüft der Prozessor in der Programmführungsdatenbank, die als relationale Datenbank aufgebaut ist, für jeden Programmdienst, ob das Dienstattribut entsprechend dem ausgewählten Filterattribut vorhanden ist oder nicht. Der Prozessor ist zum Identifizieren derjenigen Programmdienste eingerichtet, deren jeweilige Dienstattribute mit dem vom Nutzer gesetzten Filterattribut übereinstimmen. Wird ein weiteres Filterattribut ausgewählt, prüft der Prozessor wieder jeden Programmdienst der ausgewählten Programmdienstliste auf die Erfüllung der Filterkriterien, die durch die Filterart und Filterattribute definiert sind. Beim Filtern nutzt der Prozessor zur Identifizierung von den Filterattributen, die derselben Filterart zugeordnet sind, eine ODER-Verknüpfung und zur Identifizierung von den Filterattributen, die verschiedenen Filterarten zugeordnet sind, verwendet der Prozessor eine UND-Verknüpfung.

Nachdem diejenigen Programmdienste der Programmdienstliste identifiziert sind, deren Dienstattribute den ausgewählten Filterattributen entsprechen, wird die Programmdienstliste vom Prozessor derart bearbeitet, dass am Bildschirm nur diejenigen Programmdienste angezeigt werden, deren Dienstattribute den Filterattributen entsprechen. Programmdienste, deren Dienstattribute nicht den Filterattributen entsprechen, werden vom Prozessor am Bildschirm ausgeblendet, wie in Figur 5 dargestellt.

In einer besonderen Ausführungsform der Erfindung überprüft der Prozessor die bearbeitete und gefilterte Programmdienstliste, ob solche Programmdienste, deren Dienstattribute zwar den ausgewählten Filterattributen entsprechen, die Programmdienste beziehungsweise die übertragenen Daten aber verschlüsselt sind, enthalten sind und ob für deren Entschlüsselung das benötigte Entschlüsselungssystem im Fernsehempfänger zur Verfügung steht. Programmdienste, die verschlüsselt sind, werden durch ein zusätzliches Dienstattribut gekennzeichnet. Dieses Dienstattribut bezieht sich auf eine Identifikationsnummer, die beispielsweise eine Angabe zum Verschlüsselungsanbieter oder zum benötigten Entschlüsselungsmodul aufweist. Der Prozessor ist somit zum Identifizieren von verschlüsselten und unverschlüsselten Programmdiensten eingerichtet, anhand der in der relationalen Datenbank gespeicherten Daten, er prüft, ob die gerätetechnischen Voraussetzungen zum Entschlüsseln der Daten mit entsprechenden Entschlüsselungsmodulen gegeben sind.

Die Videowiedergabemittel sind zum Ausgeben der Dienstnamen der unverschlüsselten und verschlüsselten Programmdienste eingerichtet, wobei die Dienstnamen der verschlüsselten identifizierten Programmdienste nach dem Filtern nicht ausgegeben werden.

Von besonderem Vorteil ist, dass die Programmdienste nach dem Filtern keiner neuen Programmplatznummer zugeordnet werden, sie behalten die Programmplatznummer bei, der sie bereits vor dem Filtern zugeordnet waren, somit wird das Umschalten mithilfe der Zifferntasten der Fernbedienung komfortabler.

Die nach dem Filtern für die Ausgabe am Bildschirm bearbeitete Programmdienstliste kann lückenbehaftet sein.

Im vorliegenden Beispiel wurde die Programmdienstliste "TV-Liste 1 ", der in der Figur 2 sieben Programmdienste zugeordnet sind, anhand der Filterart Anbieterfilter mit den Filterattributen "Aa" und "Ab" gefiltert. In Figur 5 ist die nach dem Filtern vom Prozessor bearbeitete Programmdienstliste dargestellt, die nur noch vier Programmdienste aufweist.

Das Umschalten von einem wiedergegebenen Programmdienst auf einen anderen Programmdienst sowohl mit den Pfeiltasten als auch mit den Zifferntasten ist nach dem Filtern besonders komfortabel, weil die Programmdienstliste weniger Programmdienste aufweist, somit übersichtlicher dargestellt ist und die Programmdienste nach dem Filtern keiner anderen Programmplatznummer zugeordnet werden.

Der Vorteil, dass die Programmdienste beim Filtern keiner anderen Programmplatznummer zugeordnet werden, wird besonders deutlich, wenn der zum Filtern ausgewählten Programmdienstliste so viele Programmdienste zugeordnet sind, dass die komplette Programmdienstliste nicht auf dem Bildschirm wiedergegeben werden kann, sondern vom Prozessor auf mehrere Seiten für die Ausgabe aufgeteilt wird.

Beim erfindungsgemäßen Verfahren wird die Zuordnung der ausgewählten Filterattribute zur Programmdienstliste "TV-Liste 1" beim Ausschalten des Fernsehempfängers gelöscht beziehungsweise aufgehoben.

Es ist aber auch denkbar, dass die Zuordnung der Filterattribute zur Programmdienstliste beim nächsten Einschalten noch gespeichert ist und der Prozessor vor Aufrufen der Programmdienstliste eine Abfrage generiert und am Bildschirm ausgibt, die das Löschen oder die Aufrechterhaltung der Zuordnung der Filterattribute zur Programmdienstliste, beispielsweise zur "TV-Liste 1", betrifft.

In einer Ausführungsform der Erfindung kann der Nutzer eine Programmdienstliste zum Filtern auswählen, der alle mit den Empfangsteilen des Fernsehempfängers empfangbaren Programmdienste zugeordnet sind. Somit weist diese Programmdienstliste alle Programmdienste auf, die in den verschiedenen Betriebsarten, dem Fernseh-Betrieb, dem Radio-Betrieb oder dem Internet-Betrieb, empfangbar sind.

In einer besonders bevorzugten Ausführungsform kann nach einer Filterung einer Programmdienstliste der Nutzer die elektronische Programmzeitschrift aufrufen, die nur noch die Programmdienste enthält, die dem Filterergebnis entsprechen und die die Programmführungseinrichtung aus der Programmführungsdatenbank ausliest. Somit hat der Nutzer schnell einen Überblick über die Programmbeiträge, die von den Programmdiensten zum Empfang bereitgestellt werden.

In einer Ausführungsform der vorliegenden Erfindung wird mit der Fernsehempfangseinrichtung ein erster Programmdienst wiedergegeben und die Fernsehempfangseinrichtung umgeschaltet, sodass mittels der Fernsehempfangseinrichtung ein zweiter Programmdienst wiedergegeben wird, wobei der zweite Programmdienst ein, durch eine vorangegangene Filterung, identifizierter Programmdienst ist.

In einer Ausführungsform der Erfindung, wir vom Nutzer ein drittes Filterattribut aus der Mehrzahl von Filterattributen ausgewählt und zur Programmdienstliste gespeichert wird, welches das erste und das zweite ausgewählte Filterattribut ersetzt.

## Patentansprüche

1. Verfahren zum Filtern von Programmdiensten einer ausgewählten Programmdienstliste, welche mittels einer Fernsehempfangseinrichtung empfangbar sind, wobei die Programmdienste jeweils einen Dienstnamen und ein Dienstattribut aus einer Mehrzahl unterschiedlicher Dienstattribute aufweisen und jeweils einer Programmplatznummer der Programmdienstliste zugeordnet sind, mit folgenden Schritten:
○ Auswählen eines ersten Filterattributs aus einer Mehrzahl von Filterattributen,
○ Speichern des ersten Filterattributs, sodass das erste Filterattribut der Programmdienstliste zugeordnet wird,
○ Auswählen eines zweiten Filterattributs aus der Mehrzahl von Filterattributen,
○ Speichern des zweiten Filterattributs, sodass das zweite Filterattribut der Programmdienstliste zugeordnet wird,
○ Identifizieren derjenigen Programmdienste, welche jeweils ein Dienstattribut aufweisen, das mit dem ersten Filterattribut übereinstimmt, oder ein Dienstattribut aufweisen, das mit dem zweiten Filterattribut übereinstimmt, und
○ Ausgeben der Dienstnamen der identifizierten Programmdienste und zugeordneten Programmplatznummern, sodass jeder der ausgegebenen Dienstnamen derjenigen Programmplatznummer zugeordnet wird, welcher der jeweilige Programmdienst ursprünglich zugeordnet war.

2. Verfahren nach Anspruch 1, bei dem, wenn das erste Filterattribut und das zweite Filterattribut unterschiedlichen Filterarten angehören, nur diejenigen Programmdienste identifiziert werden, welche jeweils ein Dienstattribut aufweisen, das mit dem ersten Filterattribut übereinstimmt, und ein Dienstattribut aufweisen, das mit dem zweiten Filterattribut übereinstimmt.

3. Verfahren nach Anspruch 1, bei dem vor dem Auswählen des zweiten Filterattributs diejenigen Programmdienste identifiziert werden, die jeweils ein Dienstattribut aufweisen, das mit dem ersten Filterattribut übereinstimmt, und die Dienstnamen der identifizierten Programmdienste ausgegeben werden.

4. Verfahren nach einem der Ansprüche 1 oder 3, bei dem mittels der Fernsehempfangseinrichtung ein erster Programmdienst wiedergegeben wird und die Fernsehempfangseinrichtung umgeschaltet wird, sodass mittels der Fernsehempfangseinrichtung ein zweiter Programmdienst wiedergegeben wird, wobei der zweite Programmdienst ein identifizierter Programmdienst ist.

5. Verfahren nach einem der vorhergehenden Ansprüche, bei dem ein drittes Filterattribut aus der Mehrzahl von Filterattributen ausgewählt und gespeichert wird, sodass das dritte Filterattribut das erste Filterattribut oder das zweite Filterattribut ersetzt.

6. Verfahren nach einem der vorhergehenden Ansprüche, bei dem die Programmdienstliste von einem Nutzer der Fernsehempfangseinrichtung aus einer Mehrzahl von Programmdienstlisten ausgewählt wird.

7. Verfahren nach Anspruch 6, bei dem jede der Programmdienstlisten derart ausgebildet ist, dass alle Programmdienste der jeweiligen Programmdienstliste einer Betriebsart der Fernsehempfangseinrichtung zugeordnet sind.

8. Verfahren nach einem der Ansprüche 6 oder 7, bei dem die ausgewählte Programmdienstliste alle von der Fernsehempfangseinrichtung empfangbaren Programmdienste beinhaltet, welche einer Betriebsart zugeordnet sind.

9. Verfahren nach einem der Ansprüche 7 oder 8, bei dem die ausgewählte Programmdienstliste alle Programmdienste beinhaltet, welche von der Fernsehempfangseinrichtung in der Betriebsart empfangbar sind, in der die Fernsehempfangseinrichtung gerade betrieben wird.

10. Verfahren nach Anspruch 6, bei dem eine der Programmdienstlisten Programmdienste unterschiedlicher Betriebsarten aufweist.

11. Verfahren nach einem der vorhergehenden Ansprüche, bei dem mindestens ein weiteres Filterattribut ausgewählt wird, das weitere Filterattribut gespeichert wird, sodass das weitere Filterattribut der ausgewählten Programmdienstliste zugeordnet wird, und diejenigen Programmdienste identifiziert werden, welche jeweils ein Dienstattribut aufweisen, das mit dem ersten Filterattribut übereinstimmt und ein Dienstattribut aufweisen, das mit dem zweiten Filterattribut übereinstimmt und ein Dienstattribut aufweisen, das mit dem weiteren Filterattribut übereinstimmt.

12. Verfahren nach einem der vorhergehenden Ansprüche, bei dem nach einem Ausschalten der Fernsehempfangseinrichtung die Zuordnung der Filterattribute zu der ausgewählten Programmdienstliste aufgehoben wird.

13. Vorrichtung zum Filtern von Programmdiensten einer ausgewählten Programmdienstliste, welche mittels einer Fernsehempfangseinrichtung empfangbar sind, wobei die Programmdienste jeweils einen Dienstnamen und ein Dienstattribut aus einer Mehrzahl unterschiedlicher Dienstattribute aufweisen und jeweils einer Programmplatznummer der Programmdienstliste zugeordnet sind, wobei die Vorrichtung aufweist:
○ eine Auswahleinrichtung, welche zum Auswählen eines ersten Filterattributs und eines zweiten Filterattributs aus einer Mehrzahl von Filterattributen eingerichtet ist,
○ eine Speichereinheit, welche zum Speichern des ersten Filterattributs und des zweiten Filterattributs eingerichtet ist, sodass das erste Filterattribut und das zweite Filterattribut der Programmdienstliste zugeordnet werden,
○ einen Prozessor, welcher zum Identifizieren derjenigen Programmdienste eingerichtet ist, welche jeweils ein Dienstattribut aufweisen, das mit dem ersten Filterattribut übereinstimmt, oder ein Dienstattribut aufweisen, das mit dem zweiten Filterattribut übereinstimmt, und
○ Videowiedergabemittel, die zum Ausgeben der Dienstnamen der identifizierten Programmdienste und zugeordneten Programmplatznummern eingerichtet ist, sodass jeder der ausgegebenen Dienstnamen derjenigen Programmplatznummer zugeordnet wird, welcher der jeweilige Programmdienst ursprünglich zugeordnet war.

14. Vorrichtung nach Anspruch 13, bei der der Prozessor zum Identifizieren von verschlüsselten Programmdiensten und unverschlüsselten Programmdiensten eingerichtet ist und die Videowiedergabemittel zum Ausgeben der Dienstnamen der unverschlüsselten identifizierten Programmdienste eingerichtet sind, wobei die Dienstnamen der verschlüsselten identifizierten Programmdienste nicht ausgegeben werden.
